# EUROPEAN PATENT APPLICATION

(11) **EP 4 559 646 A1**
(43) Date of publication of application: **28.05.2025**
(21) Application number: 22951694.3
(22) Date of filing: 26.08.2022
(51) Int. Cl.: B27D 1/04, B32B 21/14

(54) **TRUCK FLOOR MANUFACTURING PROCESS AND PRODUCT THEREOF**

(30) Priority: 22.07.2022 CN 202210861866; 22.08.2022 CN 202211008546
(71) Applicant: SHANGHAI YIZHUYIDING BAMBOO TECHNOLOGY CO., LTD, Shanghai 201800 (CN)
(72) Inventor: GAO, Yonghui, Wenzhou, Zhejiang 325500 (CN); WU, Xuping, Wenzhou, Zhejiang 325500 (CN)
(74) Representative: Lermer, Christoph
(86) International application number: PCT/CN2022/115308
(87) International publication number: WO 2024/016427

(57) **Abstract**

A truck floor manufacturing process, taking bamboo as a raw material, and comprising the steps of slicing, lengthening, sizing, assembling, molding and the like. The bamboo green and the bamboo yellow on the surface are planed by means of rolling type unfolding processing and rough planer processing, and bamboo pieces and roughly planed bamboo strips can be directly used for production and manufacturing without the need to perform secondary accurate width and thickness setting by means of a fine planer. Bamboo resources are utilized to the maximum extent, and the floor strength is ensured. Also disclosed is a truck floor.

## Description

### Technical Field

This invention relates to a truck floor manufacturing process and its product, particularly a manufacturing method and product of a high-strength bamboo truck floor.

### Background Art

Bamboo is one of the fastest-growing plants in the world. Studies show that bamboo can grow up to 1.21 meters within 24 hours, completing its height and girth growth within 2-3 months. Bamboo matures quickly, forming forests within 3-5 years, and produces new shoots annually, ensuring a high yield. A single plantation can be sustainably harvested indefinitely. Bamboo is widely distributed, with a considerable scale of resources. Globally, there are 1,642 known species of bamboo plants, and 39 countries collectively have over 50 million hectares of bamboo forests, with an annual bamboo output exceeding 600 million tons. Among these, China has more than 800 species of bamboo. Using bamboo as a material for manufacturing boards is not only environmentally friendly but also provides a broad, low-cost source of raw materials.

Truck body panels or floors typically consist of a surface layer and a core layer. For example, CN201510655393.4 discloses a one-piece molded truck body panel and its manufacturing process for use in box trucks. The outer layer material of the panel is fiberglass, with a PVC foam board as the core layer. The process includes the following steps: 1) Treating the mold release material, curing at room temperature; 2) Laying surface felt, composite felt, PVC foam board, and flow composite felt; 3) Fixing the Ω tube and winding tube, applying sealing strips, and laying release cloth and vacuum bags to form a vacuum system; 4) Sealing the vacuum system with the resin collector and checking the vacuum system's seal; 5) Maintaining vacuum pressure; 6) Preparing the resin and performing vacuum infusion; 7) Curing, demolding, and post-processing. Compared with the prior art, this invention uses a PVC foam board as the core layer, offering advantages such as water resistance, fire resistance, acid and alkali resistance, termite resistance, lightweight, high hardness, thermal insulation, sound insulation, and shock absorption. The vacuum infusion process creates a one-piece molding, resulting in a smooth finish on both sides of the product.

CN202010238137.6 belongs to the technical field of truck body panel preparation and discloses a lightweight truck body panel and its preparation method. It includes a first panel layer, a second panel layer, a core layer, and a frame support layer, with the core layer placed between the first and second panel layers. The core layer is formed by splicing several foam blocks together, with the frame support layer integrally formed between the core layer and the first and second panel layers, as well as around the edges of the core layer and between any adjacent foam blocks. The preparation steps include laying, sealing, preparing adhesive, injecting adhesive, curing, and demolding to obtain the lightweight truck body panel. This invention uses an integrated curing method, forming a frame support layer between the foam core layers while producing fiber-reinforced resin composite material panels, greatly improving the mechanical properties of the lightweight truck body panel.

CN201520551206.3 relates to a dovetail joint fastening structure for a truck body panel, including a truck body panel with two layers of fiberglass and a lightweight base layer. The base layer is equipped with several dovetail structures, with tenon slots in the upper and lower fiberglass layers. The corners of the truck body panel are reinforced with hollow reinforcing corners, overcoming the problem of the board being too thin to weld or the hinge connection lacking sufficient strength. The base structure layer is made of lightweight phenolic plywood, and the surface protection layer is made of fiberglass, both being lightweight and environmentally friendly materials. The phenolic plywood and fiberglass are fixed together using the dovetail structure, providing stability, high strength, good impact resistance, weather resistance, corrosion resistance, and a long service life. The outer surface of the fiberglass is coated with a gel coat layer, making the product more attractive and durable.

CN202111611140.9 discloses a truck body panel comprising multiple panel units connected end-to-end. Each unit includes a panel body, a first connecting end, and a second connecting end, located on either side of the panel body. Adjacent panel units are connected by the first connecting end of one unit and the second connecting end of another. The first connecting end includes an outer insert edge, a clasp groove with a clasping space, and an inner connecting edge. The second connecting end includes an inner edge for connecting with the inner connecting edge, an insertion space slot, and a clasping edge. The outer insert edge has a plug that inserts into the slot, and the clasping edge has a clasping end that fits into the clasp groove. The slot and clasp groove also include spaces for injecting adhesive. This invention also discloses a process for producing such truck body panel, providing a simple structure with good water resistance and easy assembling procedures.

CN204748815U relates to a glue-free splicing truck body panel, including a baseboard and a fire-resistant surface panel. Each bamboo strip on the panel has through holes near both ends, with a connecting shaft placed in the through holes. One end of the shaft has a stopper, and the other end has a thread with a nut. The front and rear bamboo strips on the panel have corresponding grooves that align with the through holes. The stopper and nut are placed within the grooves, eliminating the need for glue to fix the bamboo strips together. This environmentally friendly method also ensures durability. The baseboard surface has longitudinal and transverse vent grooves to prevent the fire-resistant panel from delaminating or blistering, thereby reducing losses and improving economic efficiency. The end boards use fiberboard, which has a higher bonding strength than bamboo, making the truck body panel more secure and less prone to cracking.

CN204748816U relates to a type of bamboo plywood splicing truck body panel, including a truck body panel, which consists of a substrate and a surface panel with fireproof functionality. The corners of the truck body panel are connected with hollow reinforced angles. The surface of the substrate features longitudinal and transverse recessed exhaust grooves that run through, positioned between the substrate and the surface panel. The substrate consists of a middle board and two end boards, and the bottom surface of the substrate is equipped with a slot, within which reinforcement ribs are arranged. The surface of the panel is coated with a layer of polyurethane resin mixed with acid- and alkali-resistant coatings. Because of the recessed exhaust grooves on the substrate's surface, the issue of delamination and bubbling in the fireproof panel is solved, reducing losses and improving economic efficiency. The end boards are made of fiberboard, which has higher bonding strength than bamboo sheets, making the truck body panel more securely fixed and less prone to cracking.

CN112518913A relates to a processing method for bamboo-wood composite boards and the boards themselves, falling under the technical field of bamboo material utilization. The method is characterized by slicing bamboo into at least two halves, removing the nodes on both the inner and outer curved surfaces, and smoothing them through milling or planing to ensure no significant protrusions. The radii of the inner and outer curved surfaces are made uniform to maximize bamboo utilization. The outer curved surface radius is used as a reference. Veneers are glued on both sides, and a layer of veneer is added between two bamboo boards for compression bonding. This method produces a bamboo-wood composite board with improved bamboo utilization.

CN107053366A discloses a preserved green bamboo-wood composite board, available in single-face and double-face structures. The single-face structure is made by gluing preserved green bamboo board and plywood together, while the double-face structure involves gluing two preserved green bamboo boards with plywood in between. The outer surface of the preserved green bamboo board retains its natural green layer, preserving its high hardness, strength, wear resistance, and corrosion resistance. The processing method includes material selection, sawing, node removal, softening, flattening, thickness setting, cooling, shaping, low-temperature drying, and bonding with plywood to form a preserved green bamboo-wood composite board unit. The bamboo is softened without pollution, and the preserved green bamboo board retains its high hardness, flatness, and smoothness during drying.

CN107053366B discloses a preserved green bamboo-wood composite board, available in single-face and double-face structures. The single-face structure is made by gluing preserved green bamboo board and plywood together, while the double-face structure involves gluing two preserved green bamboo boards with plywood in between. The outer surface of the preserved green bamboo board retains its natural green layer, preserving its high hardness, strength, wear resistance, and corrosion resistance. The processing method includes material selection, sawing, node removal, softening, flattening, thickness setting, cooling, shaping, low-temperature drying, and bonding with plywood to form a preserved green bamboo-wood composite board unit. The bamboo is softened without pollution, and the preserved green bamboo board retains its high hardness, flatness, and smoothness during drying.

### Summary of the Invention

The objective of this invention is to provide a manufacturing process for high-strength bamboo floor for trucks.

Another objective of this invention is to provide the product obtained from the aforementioned process.

This objective is achieved through the following approach: a truck floor manufacturing process using bamboo as the raw material, which includes the steps of slicing, lengthening, and molding, with at least the following steps:
**Step 1:** Raw material selection: Use moso bamboo that is at least 4 years old and has a diameter of no less than 50mm;
**Step 2:** Slicing: Cut the selected bamboo into segments of 500-6000mm length, slice the bamboo segments into 2-4 strips of equal width with a slicing machine, and collect the bamboo strips and bamboo shavings; or/and,
   Cut the selected bamboo into segments of 1050-2050mm length, slice the bamboo segments into bamboo billets of 15-24mm width with a slicing machine, and collect the bamboo billets and bamboo shavings;
**Step 3:** Unfold the 500-6000mm long bamboo strips through a rolling process, remove the green and yellow outer layers of the bamboo, set the thickness, and collect the bamboo strips and bamboo shavings; or use a rough planer to remove the green and yellow layers from the 1050-2050mm long and 15-24mm wide bamboo billets to obtain bamboo slats, collect the bamboo slats and shavings, and weave the bamboo slats into bamboo mats;
**Step 4:** Crush the bamboo shavings and defective bamboo strips and bamboo slats obtained in Steps 2 and 3 into powdered bamboo particles;
**Step 5:** Dry the bamboo strips, bamboo slats, woven bamboo mats, and bamboo powder until the moisture content is 8-12%;
**Step 6:** Perform lengthening processing on the dried bamboo strips and bamboo slats, forming dovetail, serrated, or beveled joints at the lengthened sections;
**Step 7:** Mix the dried bamboo powder with adhesive at a ratio of 1000g of bamboo powder to 400-700g of adhesive, and stir them in a mixer to obtain bamboo powder adhesive, which is set aside for later use;
**Step 8:** Apply adhesive to both sides or all four sides of the dried bamboo strips and bamboo slats, and soak the woven bamboo mats in the adhesive;
**Step 9:** Arrange at least two pieces of 500-6000mm long adhesive-coated bamboo strips side by side, then use a 20-50mm wide adhesive-coated cotton tape and secure it onto the bamboo strips with resin nails or other nails; or,
   Arrange the bamboo strips using wireless or wired weaving methods to connect N pieces of combined bamboo strips suitable for production; or,
   Arrange at least two 1050-2050mm long adhesive-coated bamboo slats side by side, and connect them using wireless or wired misaligned weaving or other lengthening techniques to form woven bamboo slats suitable for production;
**Step 10:** Bamboo blank combination, from bottom to top, the layers include: a base layer of phenolic resin, melamine overlay material, or side-pressed veneer of 2mm or more as the bottom layer; a second layer of adhesive-coated woven bamboo mat; a third layer of combined bamboo strips or woven bamboo slats; a fourth layer of combined bamboo strips, woven bamboo slats, or a wood buffer layer of 2.5mm or more, fiberglass, or woven bamboo mat laid horizontally or vertically; the fifth layer is the same as the third layer, the sixth layer is the same as the second layer, and the seventh layer is a surface layer of phenolic resin, melamine overlay material, or side-pressed veneer of 2mm or more, resulting in a semi-finished bamboo board with at least seven layers;
**Step 11:** Depending on the product's requirement for a non-slip or smooth surface, the semi-finished bamboo board is subjected to a one-time hot-pressing process at a temperature of 130-160°C and a pressure of 20-40Kg/cm² to obtain a high-strength bamboo truck floor.

In this invention, the surface green and yellow layers of the bamboo strips and bamboo slats are removed during the rolling and rough planning processes. Particularly for the rough-planned bamboo slats, there is no need for secondary precise planning to achieve exact thickness and width, as the bamboo strips and rough-planned bamboo slats can be directly used in production, increasing material utilization to over 90%. The preparation of combined bamboo strips or woven bamboo slats does not require new equipment, and the strength and support are also guaranteed.

Based on the above approach, the bamboo strips or bamboo slats obtained in Step 2 or 3 can be treated or untreated for degreasing.

Based on the above approach, the bamboo strips or bamboo slats obtained from Step 2 or 3 can be treated for corrosion resistance.

The drying temperature in Step 5 is controlled at 50-70°C until the moisture content of the bamboo strips, bamboo slats, bamboo powder, and woven bamboo mats is 8-12%.

To meet the thickness requirements of the product, the third, fourth, and fifth layers in Step 10 can be repeated to increase the structural layers.

Furthermore, for truck floors with strict thickness specifications, in Step 10, the bamboo powder adhesive can be applied separately in the third, fourth, and fifth layers. Using this method and fixing the combination with plastic resin nails or fasteners (such as soft aluminum nails) results in semi-finished products with dimensions of L2000-10000 × W140-2100 × T12-50mm. This not only allows for adhesive adjustment of the floor material but also ensures the strength requirements while reducing costs.

In Step 11, the obtained high-strength bamboo board can undergo further processing such as cutting, sawing, planing, and drilling to produce high-strength bamboo truck floors with dimensions of L2000-10000 × W140-2200 × H12-50mm;
Additionally, in Step 10, the woven bamboo mats of the second and sixth layers can be replaced with a wood buffer layer of 1-2.5mm thickness.

This invention also provides a high-strength bamboo truck floor obtained from any of the above manufacturing processes.

The floor, from bottom to top, sequentially includes: a base layer of phenolic resin, melamine overlay material, or side-pressed veneer of 2mm or more; a second layer of adhesive-coated woven bamboo mat; a third layer of combined bamboo strips or woven bamboo slats as the skeleton structure; a fourth layer of combined bamboo strips or woven bamboo slats laid horizontally or vertically; a fifth layer identical to the third layer; a sixth layer identical to the second layer; and a seventh layer of phenolic resin, melamine overlay material, or side-pressed veneer of 2mm or more as the surface layer.

In this invention, a bamboo powder adhesive layer or additional adhesive-coated woven bamboo mats can be used between the third and fourth layers and between the fourth and fifth layers as interlayer buffers and height adjustment layers to achieve precise control of the product's thickness.

This invention also provides a bamboo product board suitable for outdoor use, with process improvements that make it suitable for production on an intelligent production line.

This invention maximizes the utilization of bamboo raw materials, and by processing the bamboo strips through rolling and the bamboo slats through rough planning, the surface green and yellow layers have been removed, eliminating the fine planning process. The bamboo strips and rough-planned bamboo slats are directly used in the production of the invention's products, increasing material utilization to over 90%. The truck floor buffer layer in the invention uses woven bamboo mats, ensuring strength while maximizing the use of bamboo resources. The use of combined bamboo strips or woven bamboo slats as the skeleton structure ensures strength without the need for new equipment.

Bamboo products have a low carbon footprint throughout their lifecycle. Compared to plastic products, bamboo products have a negative carbon footprint. Bamboo products are fully biodegradable after use, better protecting the environment and human health. Raw materials are easily accessible and stable in supply.

### Brief Description of the Drawings

Figure 1: Structural diagram of the bamboo strips in Step 2.
Figure 2: Structural diagram of the bamboo billets in Step 2.
Figure 3: Diagram illustrating the rolling and unfolding process of bamboo strips in Step 3.
Figure 4: Structural diagram of the joints in bamboo strips and bamboo slats.
Figure 5: Diagram of the composite bamboo strips.
Figure 6: Diagram of the woven bamboo slats.
Figure 7: Diagram of the bamboo blank combination.
Figure 8: Diagram of the high-strength bamboo truck floor.
Figure 9: Process flow diagram of the anti-corrosion equipment.
Figure 10: Diagram of the single-layer board structure, where, Figure 10A shows a flat-pressed single-layer board and Figure 10B shows a side-pressed single-layer board.
Figure 11: Diagram of the bamboo product finishing equipment.
Figure 12: Diagram of the multi-layer board structure, where, Figure 12A shows a board with a two-layer core structure, Figure 12B shows a board with a three-layer core structure and Figure 12C shows a board with a five-layer core structure.

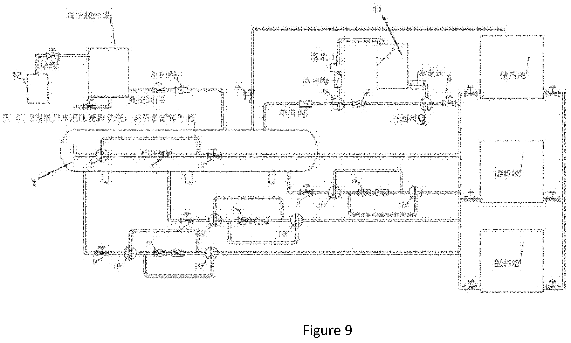

### Legends in Figure 9:

1- Anti-corrosion tank
2- High-pressure sealing switch, 3- High-pressure sealing pump
4- Overflow valve
5- Liquid inlet/outlet valve, 6- Liquid inlet/outlet pump
7- High-pressure pump, 8- High-pressure pipeline valve, 9- Three-way valve
10- Liquid inlet/outlet three-way valve
11- Measuring tank
12- Vacuum pump

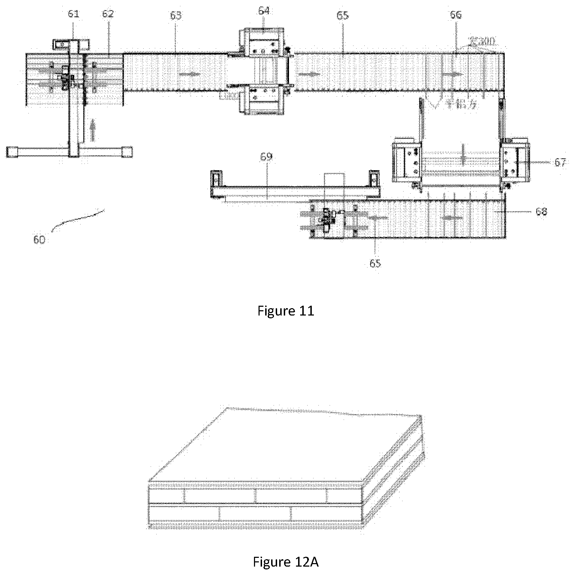

### Legends in Figure 11:

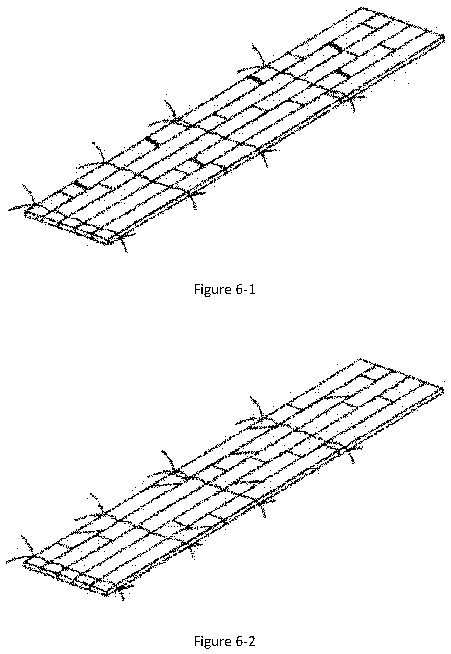

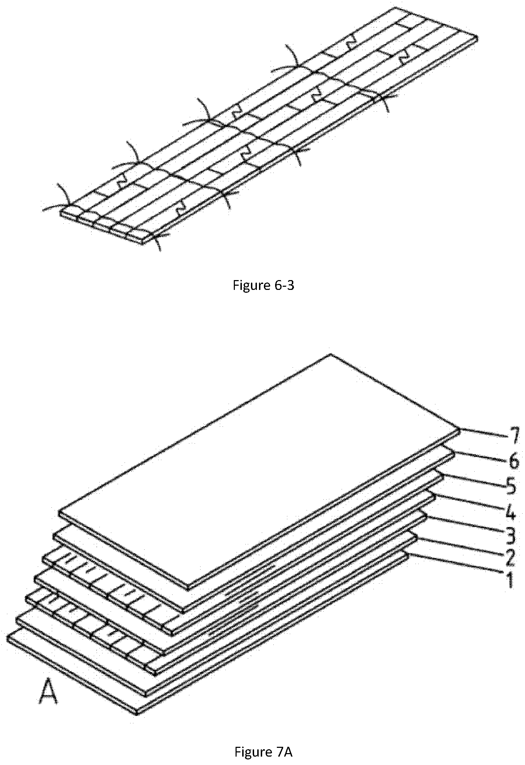

In Figure 6,
60- Finishing equipment
61- Heavy-duty three-legged gantry feeder, 62- Intelligent panel roller
63- Roller table
64- Double-end milling machine with longitudinal band saw and milling functions
65- 4-meter conveyor roller, 66- Horizontal connecting roller assembly
67- Double-end milling machine with longitudinal band saw function
67- Intelligent board collecting roller, 69- Lateral gantry offloading machine

### Detailed Description of Embodiments

### Embodiment 1

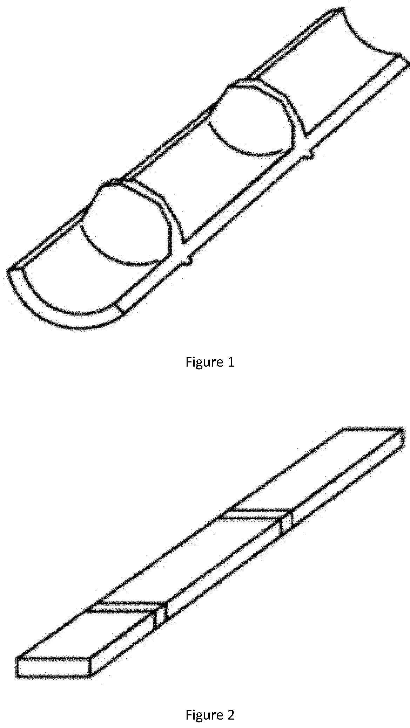

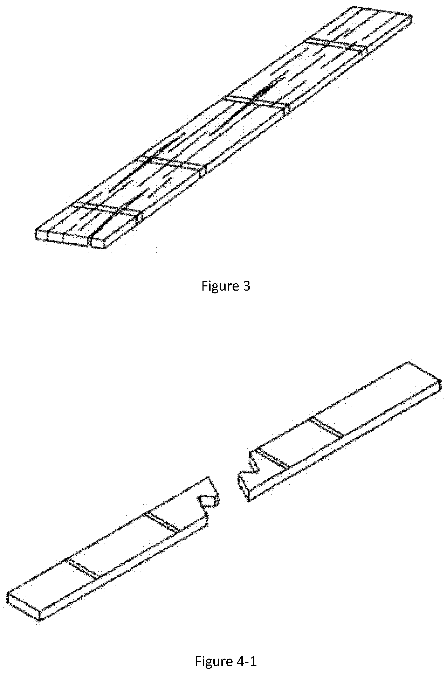

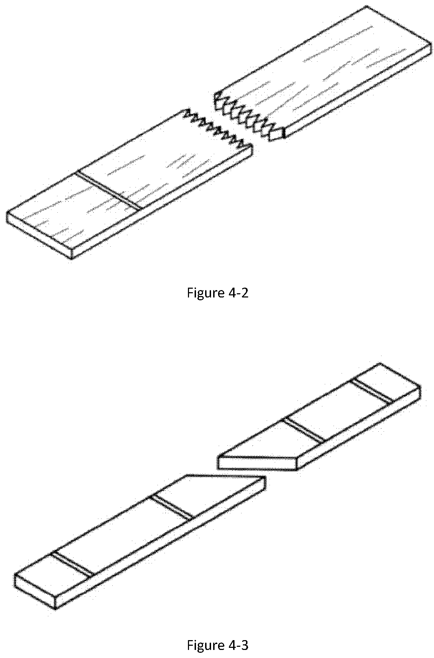

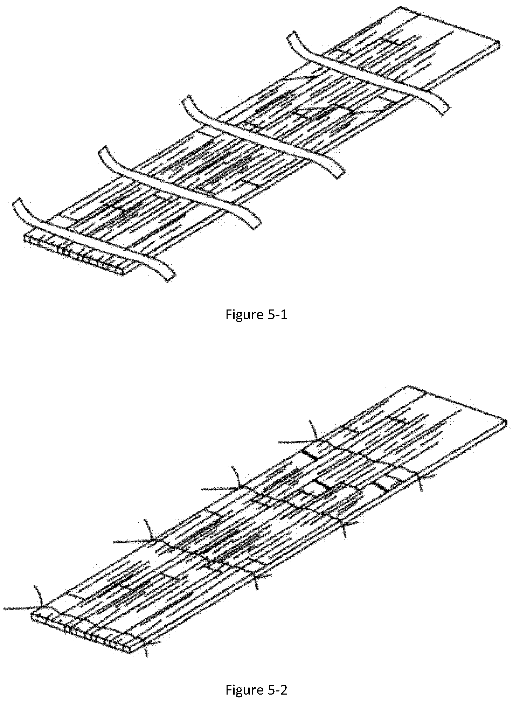

A type of truck floor made of bamboo involves the following steps:
**Step 1:** Raw material selection: Use moso bamboo that is at least 4 years old and has a diameter of no less than 50mm, with no length restrictions;
**Step 2:** Slicing: Depending on optimal bamboo utilization, cut the selected bamboo into segments of 500-6000mm, slice the bamboo segments into 2-4 strips of equal width with a slicing machine, and collect the bamboo strips and bamboo shavings; or,
   Cut the selected bamboo into segments of 1050-2050mm length, slice the bamboo segments into bamboo billets of 15-24mm width (commonly known as bamboo slats) with a specialized machine, as shown in Figures 1 and 2, and respectively collect bamboo billets and shavings;
**Step 3:** Unfold the 500-6000mm long bamboo strips into equal widths using a specialized machine that removes the outer green and inner yellow layers while achieving a uniform thickness, as shown in Figure 3, and collect the strips and shavings; or,
   Shave off the outer green and inner yellow layers from bamboo billets (1050-2050mm, 15-24mm wide) with a rough planer to obtain bamboo slats, and collect both the slats and shavings;
**Step 4:** Crush the bamboo shavings and defective bamboo strips and bamboo slats obtained in Step 2 and 3 into powdered bamboo particles;
   Bamboo strips or slats can undergo or not undergo degreasing or preservation treatment as desired;
**Step 5:** Dry the bamboo strips, slats, woven bamboo mats, and bamboo powder at 50-70°C until their moisture content is 8-12%;
**Step 6:** According to product size, process the joints of the dried bamboo strips and slats, forming dovetail joints (Figure 4-1), serrated joints (Figure 4-2), or beveled joints (Figure 4-3);
**Step 7:** Mix the dried bamboo powder with adhesive at a ratio of 1000g of bamboo powder to 400-700g of adhesive, and stir them in a mixer to obtain bamboo powder adhesive, which is set aside for later use;
**Step 8:** Apply adhesive on both sides or all four sides of the dried bamboo strips and slats, or soak the woven bamboo mats in the adhesive;
**Step 9:** Depending on product size, arrange at least two pieces of 500-6000mm long adhesive-coated bamboo strips side by side, and secure them with 20-50mm wide adhesive-coated cotton tapes using resin nails (or other fasteners that will not damage the hot-pressing molds) to form combined bamboo strips (Figure 5-1); or,
   Arrange the bamboo strips using wireless or wired weaving methods to connect N pieces of combined bamboo strips suitable for production (Figure 5-2); or,
   Arrange at least two 1050-2050mm long adhesive-coated bamboo slats side by side, and connect them using wireless or wired misaligned weaving or other lengthening techniques to form woven bamboo slats suitable for production. Specifically, as shown in Figure 6-1, the bamboo slats are connected using a toothed extension, forming a curtain-like bamboo slat with wired staggered weaving; as shown in Figure 6-2, the bamboo slats are connected using an oblique extension, forming a curtain-like bamboo slat with wired staggered weaving; and as shown in Figure 6-3, the bamboo slats are connected using a dovetail extension technique, forming a curtain-like bamboo slat with wired weaving.
**Step 10:** Based on the product usage requirements and size requirements, the following bamboo blank combination steps are performed from bottom to top in order: First, lay the bottom surface layer with phenolic resin, melamine-coated materials, or side-pressed veneer of more than 2mm, as the bottom layer 1. On the bottom layer 1, lay the glued woven bamboo curtain as the second layer 2. The third layer 3 is the skeleton structure layer, where combined bamboo strips or curtain-like bamboo strips are laid. The fourth layer 4 is arranged differently from the third layer, such as horizontally or vertically, with combined bamboo strips or curtain-like bamboo strips. The fifth layer 5 is the same as the third layer 3. The sixth layer 6 is the same as the second layer 2. The seventh layer 7 is the surface layer, which consists of a phenolic resin, melamine-type coated material, or side-pressed veneer of more than 2mm.
   On the third layer 3, fourth layer 4, and fifth layer 5, bamboo powder adhesive is applied, resulting in a semi-finished bamboo truck floor with dimensions of L2000-10000 × W140-2100 × T12-50mm (as shown in Figure 7A).
**Step 11:** Depending on the product's requirement for a non-slip or smooth surface, the semi-finished product is subjected to a one-time hot-pressing process at a temperature of 130-160°C and a pressure of 20-40 Kg/cm². After cooling or without cooling, a high-strength bamboo board is obtained.

To meet the product's thickness requirements, the third, fourth, and fifth structural layers can be repeated as needed to achieve the desired thickness. Additionally, to ensure a tight bond between the curtain-like bamboo slats and to maintain the specified product thickness, woven bamboo mats are added, and adhesive-coated bamboo powder is applied to the third, fourth, and fifth layers.

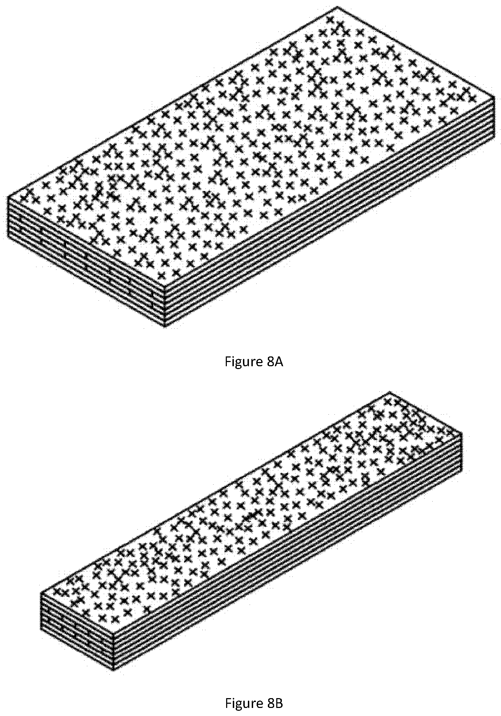

The high-strength bamboo board obtained in Step 11 can be further processed by automated intelligent equipment for cutting, sawing, planing, drilling, etc., to produce a finished high-strength bamboo truck floor product with dimensions of L2000-10000 × W140-2200 × T12-50mm (as shown in Figure 8A). The product's performance is shown in Table 1.

The high-strength bamboo truck floor described above uses bamboo with a diameter of more than 50mm. This process solves the high-cost issue in the bamboo industry, offering advantages such as low cost, light density, high strength, and full utilization of bamboo powder, turning waste into treasure, and shortening the production cycle. It eliminates the previous steps of bamboo joint removal, green removal, and yellow removal. The physical properties of the bamboo truck floor manufactured by this embodiment are shown in Appendix Table 1. This invention replaces wood with bamboo, solving the problem of traditional processes that could only produce side-pressed products.

**Table 1:**

| **Physical Properties of High-Strength Bamboo Truck Floor** | | | | |
|---|---|---|---|---|
| Item | | | Performance Value | |
| Specific Gravity [g/cm³] | | | 0.65-0.80[g/cm3] | |
| Moisture Content [%] | | | Less than 12 [%] | |
| Expansion Rate [%] | | | 5[%]-10[%] | |
| Bonding Performance | Boiling Delamination Test | General Section | | Delamination less than 10%; the delamination length of the same bonded layer is less than 1/3 of the total bonded layer length |
| Bonding Strength [MPa] | | | General Section | Above 2.0 [MPa] |
| Three-Point Bending Test | Static Bending Strength [MPa] | Vertical | Above 85 [MPa] | |
| | | Horizontal | Above 20 [MPa] | |
| | Modulus of Elasticity [MPa] | Vertical | Above 7000 [MPa] | |
| | | Horizontal | Above 1500 [MPa] | |
| Impact Resistance [times] | | General Section | Above 60 [times] | |
| Abrasion Resistance | Initial Stage [mm] | General Section | Below 1 [mm] | |
| Formaldehyde Emission [mg/m³] | | | Less than 0.03 [mg/m³] | |

The high-strength bamboo board manufactured has excellent performance.

### Embodiment 2

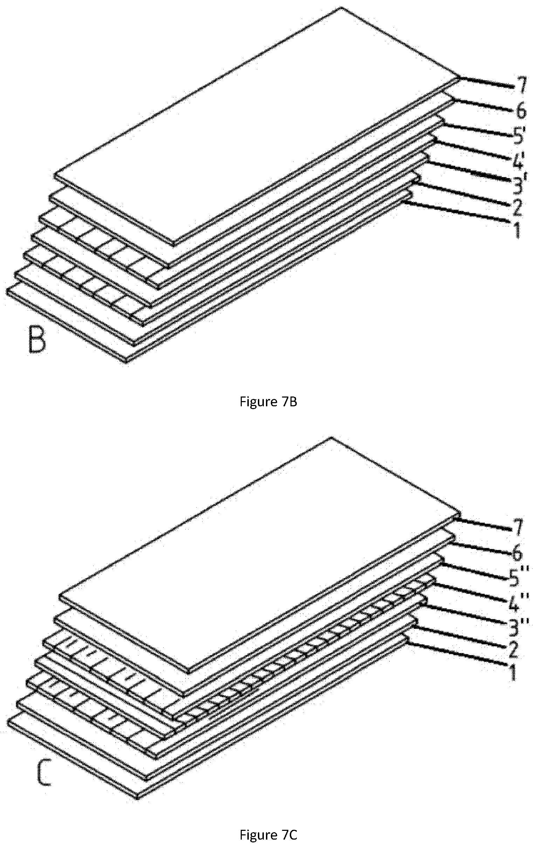

A type of truck floor is described, with a process similar to the steps in Embodiment 1. The difference lies in the use of curtain-like bamboo slats in both the third and fifth layers, and combined bamboo strips in the fourth layer. The manufacturing process is as follows:
**Step 1:** Raw material selection: Use moso bamboo that is at least 4 years old and has a diameter of no less than 50mm, with no length restrictions;
**Step 2:** Slicing: Depending on optimal bamboo utilization, cut the selected bamboo into segments of 500-6000mm, slice the bamboo segments into 2-4 strips of equal width with a slicing machine, and collect the bamboo strips and bamboo shavings; or,
   Cut the selected bamboo into segments of 1050-2050mm length, slice the bamboo segments into bamboo billets of 15-24mm width (commonly known as bamboo slats) with a specialized machine, as shown in Figures 1 and 2, and respectively collect bamboo billets and shavings;
**Step 3:** Unfold the 500-6000mm long bamboo strips into equal widths using a specialized machine that removes the outer green and inner yellow layers while achieving a uniform thickness, as shown in Figure 3, and collect the strips and shavings; or,
   Shave off the outer green and inner yellow layers from bamboo billets (1050-2050mm, 15-24mm wide) with a rough planer to obtain bamboo slats, and collect both the slats and shavings;
**Step 4:** Crush the bamboo shavings and defective bamboo strips and bamboo slats obtained in Steps 2 and 3 into powdered bamboo particles;
   Bamboo strips or slats can undergo or not undergo degreasing or preservation treatment as desired;
**Step 5:** Dry the bamboo strips, slats, woven bamboo mats, and bamboo powder at 50-70°C until their moisture content is 8-12%;
**Step 6:** According to the product size, process the joints of the dried bamboo strips and slats, forming dovetail joints (Figure 4-1), serrated joints (Figure 4-2), or beveled joints (Figure 4-3);
**Step 7:** Mix the dried bamboo powder with adhesive at a ratio of 1000g bamboo powder to 400-700g adhesive, and stir them in a mixer to obtain bamboo powder adhesive, which is set aside for later use;
**Step 8:** Apply adhesive on both sides or all four sides of the dried bamboo strips and slats, and soak the woven bamboo mats in adhesive;
**Step 9:** Arrange at least two pieces of 500-6000mm long adhesive-coated bamboo strips side by side, then use a 20-50mm wide adhesive-coated cotton tape and secure it onto the bamboo strips with resin nails or other nails (Figure 5-1); or,
   Arrange the bamboo strips using wireless or wired weaving methods to connect N pieces of combined bamboo strips suitable for production (as shown Figure 5-2); or,
   Arrange at least two 1050-2050mm long adhesive-coated bamboo slats side by side, and connect them using wireless or wired misaligned weaving or other lengthening techniques to form curtain-like bamboo slats suitable for production (as shown in Figure 6);
**Step 10:** Based on the product usage requirements and size requirements, the following bamboo blank combination steps are performed from bottom to top in order: First, lay the bottom surface layer with phenolic resin, melamine-coated materials, or side-pressed veneer of more than 2mm, as the bottom layer 1;. The second layer 2 is a glued wooden buffer layer or woven bamboo mat with a thickness of 1-2.5mm. The third layer 3 is curtain-like bamboo slat. The fourth layer 4 is curtain-like bamboo slat oriented perpendicularly to the third layer, either horizontally or vertically. The fifth layer 5 is the same as the third layer. The sixth layer 6 is the same as the second layer. The seventh layer 7 is a surface phenolic resin, melamine overlay material, or a side-pressed veneer of at least 2mm. This results in a semi-finished bamboo board of size L2000-10000 × W140-2100 × T12-50mm (as shown in Figure 7B).
**Step 11:** Depending on the product's requirement for a non-slip or smooth surface, the semi-finished product is subjected to a one-time hot-pressing process at a temperature of 130-160°C and a pressure of 20-40 Kg/cm². After cooling or without cooling, a high-strength bamboo board is obtained.

To meet the product's thickness requirements, the third, fourth, and fifth structural layers can be repeated as needed to achieve the desired thickness. Additionally, to ensure a tight bond between the curtain-like bamboo slats and to maintain the specified product thickness, woven bamboo mats are added, and adhesive-coated bamboo powder is applied to the third, fourth, and fifth layers.

The high-strength bamboo board obtained in Step 11 is processed further using automated intelligent equipment for cutting, sawing, planing, and drilling to produce the finished high-strength bamboo truck floor, with dimensions R (as shown in Figure 8B). The finished product meets the performance requirements.

The bamboo strips or slats obtained in Step 2 or 3 can undergo degreasing and anti-corrosion treatments to increase the product's service life and structural stability.

### Embodiment 3

This embodiment is similar to Embodiment 1, with the difference that the third and fifth layers use composite bamboo pieces, and the fourth layer uses woven bamboo strips. The manufacturing process is as follows:
A type of truck floor made of bamboo, comprising the following steps:
**Step 1: Raw material selection:** Select moso bamboo that is at least 4 years old and has a diameter of no less than 50mm, with no length restrictions;
**Step 2: Slicing:**
   Depending on optimal bamboo utilization, cut the selected bamboo into segments of 500-6000mm, slice the bamboo segments into 2-4 strips of equal width with a slicing machine, and collect the bamboo strips and bamboo shavings; or,
   Cut the selected bamboo into segments of 1050-2050mm length, slice the bamboo segments into bamboo billets of 15-24mm width (commonly known as bamboo slats) with a specialized machine, as shown in Figures 1 and 2, and respectively collect bamboo billets and shavings;
**Step 3:** Unfold the 500-6000mm long bamboo strips into equal widths using a specialized machine that removes the outer green and inner yellow layers while achieving a uniform thickness, as shown in Figure 3, and collect the strips and shavings; or,
   Shave off the outer green and inner yellow layers from bamboo billets (1050-2050mm, 15-24mm wide) with a rough planer to obtain bamboo slats, and collect both the slats and shavings;
**Step 4:** Crush the bamboo shavings and defective bamboo strips and bamboo slats obtained in Steps 2 and 3 into powdered bamboo particles;
   Bamboo strips or slats can undergo or not undergo degreasing or preservation treatment as desired;
**Step 5:** Dry the bamboo strips, slats, woven bamboo mats, and bamboo powder at 50-70°C until their moisture content is 8-12%;
**Step 6:** According to product size, process the joints of the dried bamboo strips and slats, forming dovetail joints (Figure 4-1), serrated joints (Figure 4-2), or beveled joints (Figure 4-3);
**Step 7:** Mix the dried bamboo powder with adhesive at a ratio of 1000g of bamboo powder to 400-700g of adhesive, and stir them in a mixer to obtain bamboo powder adhesive, which is set aside for later use;
**Step 8:** Apply adhesive on both sides or all four sides of the dried bamboo strips and slats, and soak the woven bamboo mats in the adhesive;
**Step 9:** Arrange at least two pieces of 500-6000mm long adhesive-coated bamboo strips side by side, then use a 20-50mm wide adhesive-coated cotton tape and secure it onto the bamboo strips with resin nails or other nails (Figure 5-1); or,
   Arrange the bamboo strips using wireless or wired weaving methods to connect N pieces of combined bamboo strips suitable for production (as shown Figure 5-2); or,
   Arrange at least two 1050-2050mm long adhesive-coated bamboo slats side by side, and connect them using wireless or wired misaligned weaving or other lengthening techniques to form curtain-like bamboo slats suitable for production (as shown in Figure 6);
**Step 10:** Based on the product usage requirements and size requirements, the following bamboo blank combination steps are performed from bottom to top in order: First, lay the bottom surface layer with phenolic resin, melamine-coated materials, or side-pressed veneer of more than 2mm, as the bottom layer 1. The second layer 2 is a glued wooden buffer layer or woven bamboo mat with a thickness of 1-2.5mm. The third layer 3 is combined bamboo strip. The fourth layer 4 is curtain-like bamboo slat oriented either horizontally or vertically. The fifth layer 5 is the same as the third layer. The sixth layer 6 is the same as the second layer. The seventh layer 7 is a surface phenolic resin, melamine overlay material, or a side-pressed veneer of at least 2mm. This results in a semi-finished bamboo board of size L2000-10000 × W140-2100 × T12-50mm (as shown in Figure 7C);
**Step 11:** Depending on the product's requirement for a non-slip or smooth surface, the semi-finished product is subjected to a one-time hot-pressing process at a temperature of 130-160°C and a pressure of 20-40 Kg/cm². After cooling or without cooling, a high-strength bamboo board is obtained.

To meet the product's thickness requirements, the third, fourth, and fifth structural layers can be repeated as needed to achieve the desired thickness. Additionally, to ensure a tight bond between the curtain-like bamboo slats and to maintain the specified product thickness, woven bamboo mats are added, and adhesive-coated bamboo powder is applied to the third, fourth, and fifth layers. Using these methods, along with securing the layers with plastic resin nails or other fasteners, a semi-finished product with dimensions L2000-10000 × *W140-2100* × T12-50mm is obtained.

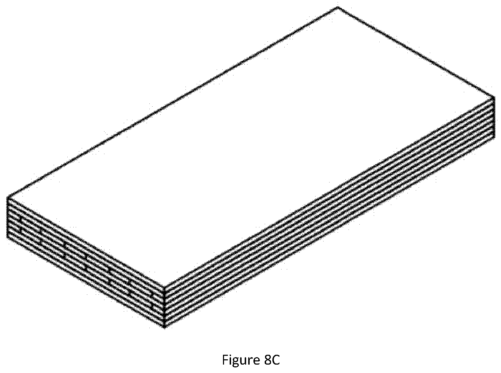

The high-strength bamboo board obtained in Step 11 is further processed using automated intelligent equipment for cutting, sawing, planing, and drilling to produce high-strength bamboo truck floor products with finished specifications (Figure 8C). The product performance can meet the standards shown in Table 1.

Additionally, in Step 11, for the second and sixth layers, the woven bamboo mat is replaced with a wooden buffer layer with a thickness of 1-2.5mm.

The high-strength bamboo truck floor mentioned above uses moso bamboo with a diameter of over 50mm. This process addresses the high cost issues in the bamboo industry by being cost-effective, lightweight, strong, and fully utilizing bamboo powder, turning waste into value. It also features a short production cycle, eliminating the previous steps of removing bamboo joints, outer skin, and inner layer. The physical properties of the bamboo truck floor produced by this invention are shown in the attached Table 1, solving the challenges of traditional processes that could only produce side-pressed products. This invention replaces wood with bamboo, with performance as shown in Table 1.

### Embodiment 4

This **embodiment** is similar to **Embodiment** 1, with the difference in the method of bamboo blank combination. The manufacturing process is as follows:
The bamboo blank combination from bottom to top is as follows:
The bottom layer is a phenolic resin, melamine overlay material, or a side-pressed veneer of at least 2mm.
The second layer is a wooden buffer layer with a thickness of at least 0.8mm, laid horizontally or vertically.
The third layer is a woven bamboo mat, curtain-like bamboo slat or combined bamboo strip, glued and laid horizontally or vertically.
The fourth layer is the same as the second layer.
The fifth layer is the same as the third layer.
Repeat the second and third layers as needed to achieve the required product thickness. The final layer is a phenolic resin, melamine overlay material, or a side-pressed veneer of at least 2mm, resulting in a multilayer cross-structure bamboo board semi-finished product.

### Embodiment 5

A method for preparing bamboo products for outdoor use:
This embodiment describes a method for preparing outdoor bamboo products through the following steps:

### Step 1: Raw material selection and processing:

1) Use moso bamboo that is over 4 years old with a diameter of more than 50mm, cut the bamboo into segments with a length of 1050mm to 2050mm, slice these segments into bamboo strips with a width of 15mm to 32mm using a specialized slicing machine. The bamboo strips are then roughly planed to remove the bamboo's green outer layer, the yellow inner layer, and the nodes. The strips are also trimmed to achieve uniform width and thickness. Any remaining green or yellow bamboo material is scraped off during this process, resulting in rough-planed bamboo slats, hereafter referred to as "bamboo slats".
2) Select rough-planed bamboo slats with dimensions of Length (L) × Width (W) × Thickness (T) = L(500~2050mm) × W(15~25.5mm) × T(4~15mm). These slats undergo a full-pressure impregnation process for anti-corrosion and anti-mildew treatment. This process can be applied to either carbonized and degreased, non-carbonized and degreased, or finely planed bamboo slats. The treatment conditions are as follows: Under a pressure of 10 to 20 kg, the absorption rate is between 250 to 450 kg/m³. This is done in a pressure-sealed anti-corrosion tank, following the process illustrated in Figure 9, and according to the following steps:
   2.1) Calculate the volume of the bamboo slats based on their specifications. Determine the required amount of treatment agent and absorption capacity based on the absorption rate of 250-450 kg/m³.
   2.2) Add the treatment solution to the metering tank 11 according to the calculated amount.
   2.3) Open the high-pressure seal switch 2 and start the high-pressure sealing pump (3) to ensure that the door of the anti-corrosion tank is sealed with a pressure of at least 15 kg to ensure complete sealing.
   2.4) Open the overflow valve 4 of the anti-corrosion tank and the valve on the inlet pipeline (5).
   2.5) Start the inlet pump 6 to add the treatment solution into the anti-corrosion tank (1) until the solution overflows from the overflow pipe.
   2.6) Close the inlet pipe valve 5 and the overflow valve 4.
   2.7) Open the high-pressure pipeline valve 8 and start the high-pressure pump 7. When the pressure reaches 2-4 kg, close the three-way valve 9, switch the three-way valve on the high-pressure inlet pipeline, and begin using the treatment solution from the metering tank 11.
   2.8) Maintain the pressure in the anti-corrosion tank at 13-20 kg until the high-pressure pump has injected all the solution from the metering tank.
   2.9) After the pressure-holding period, first open valves 5, 10, and the overflow valve 4. Start the vacuum pump 12 to reduce the pressure to 0, then open the overflow valve 4 and start the discharge pump 6 to release the pressure. In this embodiment, the same pipeline is used for both the inlet and discharge processes. Thus, the pump is referred to as the inlet pump during the inlet process and the discharge pump during the discharge process. Valves 5 and 10 are also referred to as discharge valves.
   2.10) After the pressure is fully released, close valves 5 and 10, keeping the overflow valve 4 open.
   2.11) Open the tank door and remove the treated bamboo slats.

The above steps have been intelligently designed, adopting a one-click operation mode. The automated control module separately controls the metering pump 7, pressurizing pump 6, vacuum pump 12, liquid inlet/outlet valves, overflow valve, and the opening and closing of the anti-corrosion tank door, as well as the various temperature and pressure sensors within the anti-corrosion tank. The CPU calculates the pressurizing, pressure-holding, and depressurizing times based on the relationship between the amount of bamboo slats added and the absorption rate. Instructions are then transmitted through the automated control module to complete each step described in Claim 1. This solution addresses the complexity of traditional operational steps, enhancing the accuracy of absorption rates and operation times, while offering the advantages of safety, reliability, and efficiency.

### Step 2: Bamboo slat drying;

The bamboo slats obtained from Steps 1 and 2 are placed in a drying chamber with a stacking width that does not exceed the drying rack. A minimum 60mm-wide air duct is left between each layer, and the bamboo slats are stacked 30-50 layers high. The drying chamber is equipped with temperature, humidity, and moisture content sensors. The bamboo slats are dried when the set temperature is between 50-65°C, humidity is 30-35%, and the moisture content is controlled between 6-12%.

In Step 2, the sensors for temperature, humidity, and bamboo slat moisture content in the drying chamber automatically transmit the collected data to the control module, which uses an intelligent control system. Based on real-time data and the type of bamboo slats, the drying time is determined. When the bamboo slats reach the required moisture content, the system automatically switches to a constant temperature mode. Once the set constant temperature time is reached, the drying chamber automatically cuts off the energy supply.

The intelligent drying control system ensures that the bamboo slats do not easily crack or deform during the drying process. By maintaining a constant temperature and using a reasonable stacking method, the system ensures uniform moisture content in the bamboo slats, contributing to energy conservation and emission reduction.

**Step 3: Fine planing of bamboo slats:** The rough-planed bamboo slats from Step 1 are further planed to achieve a thickness tolerance of -0/+5cc, a width tolerance of ±20cc, and a moisture content controlled between 6-12%, resulting in finely planed bamboo slats.

**Step 4: Bamboo slat selection:** The finely planed bamboo slats obtained in Step 3 are classified into the following standard categories by either manual or intelligent equipment: Grade 1: Edge defects with a depth of 0-3mm, width of 0-3mm, and length of 0-15mm at the ends; Grade 2: No cracks at the ends, with the smallest remaining yellow edge >7mm, remaining yellow length of 0-50mm, no insect holes, and no mildew; Grade 3: Green edge with a width of 0-3mm, edge defect depth of 0-3mm, width of 0-3mm, and length of 0-15mm at the ends; Grade 4: No cracks, the smallest remaining yellow edge width of 0-1mm, and no restrictions on length. The different grades of bamboo slats are stacked separately, with 7 slats per row, 10 layers, and 40 layers per stack. The purpose of classification is to ensure that all different grades of bamboo slats can be fully utilized through technical processing, significantly improving the utilization rate of raw materials.

**Step 5: Intelligent lengthening:** Based on different product requirements, the rough-planed bamboo slats and the anti-corrosion bamboo slats from Step 1, the dried bamboo slats from Step 2, the finely planed bamboo slats from Step 3, or the classified bamboo slats from Step 4 directly enter the intelligent lengthening process. An independently developed automated intelligent production line is used. First, the materials are placed in a storage bin, where the distribution system performs the following tasks: ① The lengthening part is processed, including sawing hooks/other, slotting/other, ensuring that the lengthening parts match, and controlling the height difference between bamboo strips within 0.3mm-0.9mm. ② Bamboo slats are automatically lengthened: Through high-frequency curing or other lengthening techniques, the slats are staggered to ensure that the board does not bend, the joints do not shift, and the surface is flat. ③ Gluing: The adhesive is applied to the lengthened bamboo slats, with the amount controlled between 80-140g/m² according to different product requirements. The glue viscosity is measured with a viscosity cup to ensure a value of 50S-100S. ④ Assembling: The slats are arranged and bundled according to the length and width of the product, forming semi-finished panels with dimensions of L1000-12000mm × W90-1300mm × T4-32mm, known as assembled boards.

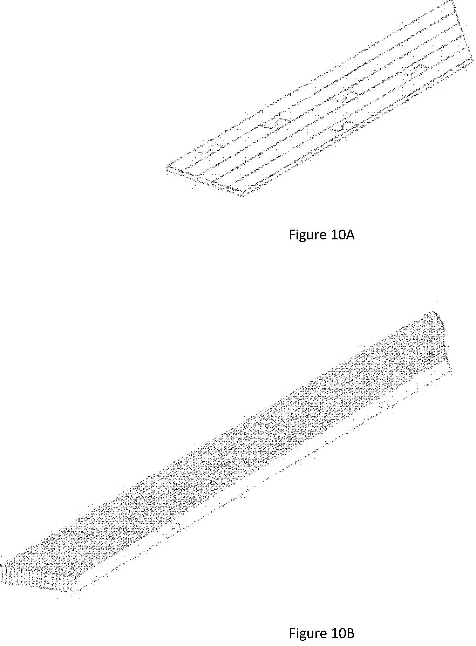

Intelligent lengthening equipment processes the sawing hooks, slotting, or other joint structures. The distribution system sends bamboo strips from any of Steps 1 to 4 into the storage bin of the feeding system. The bamboo slats are fed into the corresponding sawing hook section of each storage bin, where they are processed according to design requirements to form joint structures. The joint parts are sorted and lengthened by the equipment. After lengthening, the bamboo slats are glued and pressed into side-pressed single-layer boards (as shown in Figure 10A) or flat-pressed single-layer boards (as shown in Figure 10B). The single-layer boards are laminated, and the semi-finished panels are bundled by the bundling section of the equipment.

**Process for flat-pressed or side-pressed single-layer boards in Step 5:** Side-pressing pressure 20-40KG/cm², flat-pressing pressure 12-25KG/cm², and curing at 130-160°C for 18-30 minutes. Finished product dimensions: L1000-12000mm × W90-1300mm × T4-25mm (as shown in Figure 10).

This invention solves the problems of high labor requirements, difficulty in recruiting workers, and high labor costs associated with traditional methods. With the intelligent lengthening production line, at a monthly production capacity of 2500 cubic meters, it can replace 80 workers, save about 40% of production space, significantly shorten the production cycle, and stabilize and improve product quality. This is an advanced and efficient production line.

**Step 6: Multi-edge width sizing of single-layer boards:** The single-layer boards are processed through an intelligent panel assembling machine to complete the panel assembling:
1) Shaping according to size requirements: Using multi-edge saw equipment or four-sided planer equipment, the single-layer boards are sized and planed on multiple edges or on all four sides to achieve the required width and thickness;
2) Processing sheet panels according to product requirements: This involves slicing the panels using slicing equipment, ensuring that the thickness error of each sheet is within ±0.15mm;
3) Thickness setting of the sheet panels: The uniformity of the panels is controlled within 0.3mm using sanding or non-sanding techniques;
4) Application of adhesive: Adhesive is applied to the sheet panels and other materials using gluing equipment, with a viscosity of 70S-100S and a coating amount of no less than 120g/m²;
5) Transporting glued sheet panels: The glued sheet panels and other materials are conveyed to the panel assembling process;
6) Arrangement and combination according to product size and requirements: The glued sheet panels, bamboo strips, single-layer boards, bamboo mats (woven or unwoven with a thickness of no less than 1mm), wood veneers, fiberglass, melamine, and phenolic resin film-coated materials are arranged in a longitudinal, transverse, or crisscross structure. These materials are then fixed together with plastic resin nails, aluminum nails, or other fasteners to form a multilayered, crisscross-structured hot-pressed semi-finished product (referred to as a composite product) with dimensions such as L2000-12000mm * W90-2100mm * T10-200mm;

In Step 6, the intelligent panel assembling machine can automatically recognize, arrange, and bind the bamboo materials into multilayered panel blanks;

Furthermore, in 6) of Step 6, either the intelligent panel assembling machine or manual methods are used to arrange and combine the materials in a longitudinal, transverse, or crisscross structure. The materials are then fixed together with plastic resin nails, aluminum nails, or other fasteners to form a multilayered, crisscross-structured hot-pressed semi-finished product, with dimensions including L2000-12000mm × W90-2100mm × T10-200mm. This intelligent automated production line can replace 40 workers at a monthly production capacity of 2500 cubic meters, saving more than 35% of production space, significantly reducing production costs, increasing productivity, and ensuring stable product quality.

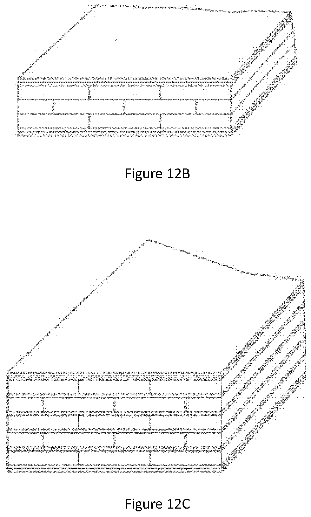

**Step 8: Hot-pressing the composite product:** The composite product is hot-pressed using a hot press machine at 130-160°C, with a main pressure of 20-40kg/cm² or side pressure of 20-40kg/cm², and a curing time of 15-60 minutes. The result is a multi-layered board with the required dimensions and a multi-layered structure, as shown in Figure 12. Figure 12A shows a two-layer core bamboo board, Figure 12B shows a three-layer core bamboo board, and Figure 12C shows a five-layer core bamboo board.

For hot-press molding of the product, either a one-time hot press molding process or a two-step process can be used. To reduce processing time after hot pressing, a cooling system can be employed, or natural cooling can be used.

**Step 9:** Using the above multi-layer boards, perform fine processing through the planing and cutting production line, as shown in Figure 6, following the steps outlined below:
① Planing and sanding: The surface is planed flat and sanded using a four-sided planer or sanding machine;
② Shaping to size: The edges are trimmed according to product size requirements.
③ Precision finishing: Based on product needs, an all-intelligent automated production line is used for deep processing, including sawing, cutting, drilling, chamfering, and slotting for precise finishing.

The bamboo product precision finishing equipment is shown in Figure 11. The finishing equipment sequence 60 includes a heavy-duty three-legged gantry feeder 61, an intelligent panel separator roller table 62. The multi-layered panels awaiting finishing are transferred via the roller table 54 into a longitudinal band saw with milling functionality, followed by a 4-meter conveyor roller table 63, a transverse connection roller table assembly 65, and a double-end milling machine with longitudinal band saw functionality 66. The finished panels are then conveyed to the intelligent panel receiving roller table 67, completing the finishing process. The panels are removed by a lateral gantry unloader 68. The multi-layered boards include two-layer, three-layer, and five-layer boards, as shown in Figure 12.

In ③ of Step 9, continuous precision finishing of the multi-layered boards can be achieved using an intelligent planing and cutting production line.

This solution addresses the challenges of complex and precise processing, improving operational efficiency and significantly reducing manual handling. The bamboo product precision finishing equipment is a planing and cutting intelligent production line.

**Step 10:** Based on the product requirements, different treatment methods are employed for the anti-corrosion and anti-mildew treatment of the multi-layered board surface, using either an immersion method or a vacuum negative pressure one-click operation method.

In Step 10, the immersion method is used with the following equipment: an immersion tank with a pressing device driven by a lifting mechanism above the tank. When the multi-layered bamboo board is fully or partially immersed in the tank, the pressing device applies downward pressure on the board. The anti-corrosion and anti-mildew agents are measured and added to the immersion tank. The volume of the tank is calculated according to product specifications, and the required amount of agent is determined based on the set absorption rate per cubic meter. The required amount of agent is automatically added to the dosing tank using intelligent equipment, according to the board's volume. Additionally, the immersion equipment is equipped with a dust-proof device to prevent dust from entering the tank.

In Step 10, the anti-corrosion equipment shown in Figure 1 can also be used.

For the intelligent operation method depicted in Figure 9, the operation steps have been designed for intelligent control, allowing for one-click operation. This approach simplifies the complexity of traditional steps, increases the absorption rate of the treatment, and improves the accuracy of the operation time, offering advantages such as operational safety and reliability.

Each stage of this invention can be designed with intelligent features, such as intelligent drying: the products are stacked on specialized drying racks and dried in an intelligent drying chamber. The temperature, humidity, moisture content, and time are all managed by an automatic intelligent control system. Depending on the type of product, the temperature is set to 50-65°C ±5°C, the humidity to 30-35% ±5%, and after drying, the moisture content of the product is controlled to be within 12%. Once the product's moisture content reaches the set requirement, the system automatically switches to a constant temperature mode, and after maintaining the temperature for the required time, the drying chamber automatically shuts off the energy supply.

The intelligent temperature control system ensures that the products do not crack or deform during the drying process, achieving energy savings and emissions reduction. The reasonable stacking method ensures uniform moisture content while also saving energy.

Intelligent inspection: The dried products are conveyed through an inspection line where intelligent inspection equipment scans and precisely identifies areas that require repair, allowing for rapid online repairs. This improves the quality and efficiency of the operation while ensuring standardization.

### Step 11: Painting:

Applying paint to the multilayer bamboo boards follows these steps:
① Automatic feeding: The material is automatically fed from the storage bin, and dust is removed. Depending on the product requirements, the product may be heated or not before painting through an automatic temperature control system;
② Rolling, spraying, or applying paint for coloring.
③ Transfer to the drying chamber: The painted products are automatically transferred to a drying storage chamber.

This invention can be applied to intelligent production lines, allowing one person to operate multiple machines or perform multiple tasks. This represents a shift from the traditional labor-intensive industry to intelligent production, promoting standardized production, uniform product quality, increased operational efficiency, and reduced operational costs.

Compared to traditional processes, this invention, with a monthly production capacity of 2500 cubic meters, can save approximately 137 workers and reduce the production area by more than 35%. The production cycle has been shortened from the original 26 days and 18 days to 15 days and 7 days, respectively. The era of low productivity and high costs in this industry is now history. The outdoor bamboo products produced through this invention exhibit the physical properties listed in Appendix II. This invention represents low investment and high output, truly ushering in an era of high productivity and efficiency. It offers indoor and outdoor bamboo products with competitive advantages to industries such as construction, providing the world with low-cost, high-quality bamboo products, and truly initiating a new era of replacing wood with bamboo.

**Table 2**

| **Physical Properties of Bamboo Products for Outdoor Use** | | | | |
|---|---|---|---|---|
| Item | | | Performance Value | |
| Specific Gravity [g/cm³] | | | 0.65-0.75[g/cm3] | |
| Moisture Content [%] | | | Less than 12 [%] | |
| Expansion Rate [%] | | | 2[%]-5[%] | |

| Bonding Performance | Boiling Delamination Test | General Section | Delamination less than 10%; the delamination length of the same bonded layer is less than 1/3 of the total bonded layer length | |
|---|---|---|---|---|
| Bonding Strength [MPa] | | | General Section | Above 2.0 [MPa] |
| Three-Point Bending Test | Static Bending Strength [MPa] | Vertical | Above 90 [MPa] | |
| | | Horizontal | Above 20 [MPa] | |
| | Modulus of Elasticity [MPa] | Vertical | Above 8000 [MPa] | |
| | | Horizontal | Above 2000 [MPa] | |
| Impact Resistance [times] | | General Section | Above 90 [times] | |
| Abrasion Resistance | Initial Stage [mm] | General Section | Below 1 [mm] | |
| Formaldehyde Emission [mg/m³] | | | Less than 0.03 [mg/m³] | |

## Claims

1. A process for manufacturing truck floor using bamboo as the raw material, including slicing and forming, **characterized by** at least the following steps:
Step 1: Raw material selection: Use bamboo that is at least 4 years old and has a diameter of no less than 50mm;
Step 2: Slicing: Depending on optimal bamboo utilization, cut the selected bamboo into segments of 500-6000mm, slice the bamboo segments into 2-4 strips of equal width with a slicing machine, and collect the bamboo strips and bamboo shavings; or/and,
Cut the selected bamboo into segments of 1050-2050mm length, slice the bamboo segments into bamboo billets of 15-24mm width (commonly known as bamboo slats) with a specialized machine, as shown in Figures 1 and 2, and respectively collect bamboo billets and shavings;
Step 3: Unfold the 500-6000mm long bamboo strips of equal width through a rolling process, remove the green and yellow outer layers of the bamboo, set the thickness, and collect the bamboo strips and bamboo shavings; or, use a rough planer to remove the green and yellow layers as well as the bamboo nodes from the 1050-2050mm long and 15-24mm wide bamboo billets while setting the thickness or both thickness and width to obtain bamboo slats, and collect the bamboo slats and bamboo shaving;
Step 4: Crush the bamboo shavings and defective bamboo strips and bamboo slats obtained in Steps 2 and 3 into powdered bamboo particles;
Step 5: Dry the bamboo strips, bamboo slats, woven bamboo mats, and bamboo powder until the moisture content is 8-12%, respectively, wherein the woven bamboo mats are bamboo mats with a thickness of not less than 1 mm, woven with wires;
Step 6: Perform lengthening processing on the dried bamboo strips and bamboo slats, forming dovetail, serrated, or beveled joints at the lengthened sections;
Step 7: Mix the dried bamboo powder with adhesive at a ratio of 1000g of bamboo powder to 400-700g of adhesive, and stir them in a mixer to obtain bamboo powder adhesive, which is set aside for later use;
Step 8: Apply adhesive to the dried bamboo strips and bamboo slats, coating either two, three, or all four sides; or, apply adhesive to woven bamboo mats using soaking or roll-coating methods.
Step 9: Arrange at least two pieces of 500-6000mm long adhesive-coated bamboo strips side by side, then use a 20-50mm wide adhesive-coated cotton tape and secure it onto the bamboo strips with resin nails or other nails; or,
Arrange the bamboo strips using wireless or wired weaving methods to connect N pieces of combined bamboo strips suitable for production; or,
Arrange at least two 1050-2050mm long adhesive-coated bamboo slats side by side, and connect them using wireless or wired misaligned weaving or other lengthening techniques to form curtain-like bamboo slats suitable for production;
Step 10: Bamboo blank combination, from bottom to top, the layers include: a base layer of phenolic resin, melamine overlay material, or side-pressed veneer of 2mm or more as the bottom layer; a second layer of adhesive-coated woven bamboo mat; a third layer of combined bamboo strips or curtain-like bamboo slats; a fourth layer of combined bamboo strip and curtain-like bamboo slat laid horizontally or vertically; the fifth layer is the same as the third layer, the sixth layer is the same as the second layer, and the seventh layer is a surface layer of phenolic resin, melamine overlay material, or side-pressed veneer of 2mm or more, resulting in a semi-finished bamboo board with at least seven layers;
Step 11: Depending on the product's requirement for a non-slip or smooth surface, the semi-finished bamboo board is subjected to a one-time hot-pressing process at a temperature of 130-160°C and a pressure of 20-40Kg/cm² to obtain a high-strength bamboo truck floor.

2. The process for manufacturing truck floor according to Claim 1, **characterized in that** the bamboo strips or bamboo slats obtained in Step 2 or Step 3 undergo degreasing treatment.

3. The process for manufacturing truck floor according to Claim 1 or 2, **characterized in that** the bamboo strips or bamboo slats obtained in Step 2 or Step 3 undergo preservation treatment.

4. The process for manufacturing truck floor according to Claim 1, **characterized in that** the drying temperature in Step 5 is controlled at 50-70°C, reducing the moisture content of the bamboo strips, bamboo slats, bamboo powder, and woven bamboo mats to 8-12%.

5. The process for manufacturing truck floor according to Claim 1, **characterized in that** in Step 10, according to the product thickness requirements, the structure of the third, fourth, and fifth layers is repeated to achieve the desired product thickness.

6. The process for manufacturing truck floor according to Claim 1 or 5, **characterized in that** in Step 10, adhesive-coated bamboo powder is laid on the third, fourth, and fifth layers, and fixed using plastic resin nails or other fasteners to obtain a semi-finished product with dimensions of L2000-10000 × W140-2100 × T12-50mm.

7. The process for manufacturing truck floor according to Claim 1 or 5, **characterized in that** in Step 11, the obtained high-strength bamboo boards are further processed by cutting, sawing, planing, and drilling, producing finished products with dimensions of L2000-10000 × W140-2200 × T12-50 mm for high-strength bamboo truck floors.

8. The process for manufacturing truck floor according to Claim 1, **characterized in that** in Step 11, the second and sixth layers are replaced with wooden buffer layers with a thickness of 1-2.5 mm instead of woven bamboo mats.

9. A truck floor, produced according to any of the manufacturing processes described in claims 1 to 8.

10. The truck floor according to claim 9, **characterized in that**:
The floor, from bottom to top, includes: a bottom layer of phenolic resin, melamine overlay material, or side-pressed veneer of 2 mm or more; a second layer of adhesive-coated woven bamboo mat; a third layer of combined bamboo strip or curtain-like bamboo slat structure; a fourth layer of horizontally or vertically laid combined bamboo strip or curtain-like bamboo slat; the fifth layer is the same as the third layer; the sixth layer is the same as the second layer; and a seventh, top surface layer of phenolic resin, melamine overlay material, or side-pressed veneer of 2 mm or more.

11. The truck floor according to claim 9, **characterized in that**:
The floor, from bottom to top, includes:
First, the bottom layer is a phenolic resin, melamine overlay material, or side-pressed veneer of 2 mm or more;
The second layer is a wooden buffer layer not less than 0.8 mm thick, laid horizontally or vertically;
The third layer is a adhesive-coated woven bamboo mat, curtain-like bamboo slat, or combined bamboo strip, laid horizontally or vertically;
The fourth layer is the same as the second layer;
The fifth layer is the same as the third layer;
The second and third layers are repeated according to the product thickness requirements, with the final layer being phenolic resin, melamine overlay material, or side-pressed veneer of 2 mm or more as the top surface, resulting in a multi-layer longitudinal and transverse structure bamboo board semi-finished product.

12. The truck floor manufacturing process according to Claim 3, **characterized in that** the bamboo strips, single-layer boards, multi-layer boards, or bamboo boards with surface layers undergo a pressurized full-penetration anti-corrosion and anti-mold treatment for outdoor bamboo products, comprising the following steps:
1) Calculate the volume of bamboo slats based on their specifications, and determine the amount of chemical agent and load based on an absorption rate of 250-450 kg per cubic meter;
2) Add the appropriate amount of chemical solution into the metering tank based on the calculated amount of agent;
3) Open the high-pressure seal switch and activate the high-pressure sealing pump to ensure that the sealing pressure of the tank door is no less than 15 kg, ensuring the tank is fully sealed;
4) Open the overflow valve of the tank and the valve of the inlet pipe;
5) Start the inlet pump to add the chemical solution into the tank until it overflows from the overflow valve;
6) Close the inlet pipe valve and the overflow valve;
7) Open the high-pressure pipe valve and start the high-pressure pump. When the immersion pressure reaches 2-4 kg, close the three-way valve, switch the three-way valve of the high-pressure inlet pipe, and begin using the calculated chemical absorption agent from the metering tank;
8) Maintain the tank pressure at 13-20 kg until the high-pressure pump finishes injecting the agent from the metering tank;
9) After the pressure holding time has passed, open the pipeline valve and the overflow valve, start the vacuum pump to draw a vacuum until the pressure drops to zero, then open the overflow valve and start the discharge pump. When the inlet and discharge pipelines are the same, it is called the inlet pump during filling and the discharge pump during discharging;
10) After releasing the pressure, close the valve on the discharge pipeline and keep the overflow valve open;
11) Open the tank door and remove the treated bamboo slats.

13. A method for preparing outdoor bamboo products according to Claim 12, **characterized by** the following steps:
Intelligent lengthening: After drying, the bamboo strips undergo intelligent lengthening through a continuous production line. Based on different product requirements, the materials are placed in storage bins and distributed through a distribution system. The lengthening step includes:
① The lengthening part is processed, including sawing hooks/other, slotting/other, ensuring that the lengthening parts match, and controlling the height difference between bamboo strips within 0.3mm-0.9mm;
② Automatic lengthening: Through high-frequency curing or other lengthening techniques, the slats are staggered to ensure that the board does not bend, the joints do not shift, and the surface is flat;
③ Gluing: Apply adhesive to the lengthened bamboo slats, controlling the glue application to 80-140 grams per square meter, with a glue viscosity between 50S-100S;
④ Automatic assembling: According to the product design requirements, the slats are assembled using an automatic intelligent assembling machine to achieve side-pressed or flat-pressed semi-finished products with dimensions of L1000-12000mmW90-1300mmT4-32mm.

14. A method for preparing outdoor bamboo products according to Claim 13, **characterized by** the refinement of the single-layer boards through a precision manufacturing line, which includes:
1) Shaping according to size requirements: using multi-sided sawing equipment or four-sided planing equipment, the single-layer boards are shaped to the required width and thickness;
2) Sheet processing according to product requirements: using slicing equipment to cut the boards into sheets, with a speed of 15 meters per minute and a thickness error within ±0.15 mm;
3) Thickness control of sheets: sanding to ensure the sheet thickness uniformity within 0.3 mm;
4) Applying adhesive: using gluing equipment, apply adhesive to the sheets and other materials, with a minimum adhesive application of 120 grams per square meter and a glue viscosity between 70S-100S;
5) Automatically transporting the glued sheets and other materials to the assembly storage bins;
6) Assembling: According to product size and requirements, the sheets, bamboo strips, single-layer boards, bamboo mats, woven bamboo mats, wood veneers, fiberglass, melamine, and phenolic resin-coated materials are assembled using an intelligent automatic board assembling machine or manually in a longitudinal, transverse, or crosswise structure. Plastic resin nails, aluminum nails, or other fasteners are used to form a multi-layer longitudinal and transverse structure hot-pressed semi-finished product, with dimensions of L2000-12000MM × W90-2100MM × T10-200MM.

15. A method for preparing outdoor bamboo products according to Claim 14, **characterized by** the following assembling steps according to product usage requirements and size specifications: First, lay the bottom surface layer, which can be phenolic resin, melamine, or other coated materials, or a side-pressed veneer of 2 mm or more. The second layer is laid in the longitudinal direction with a glued wooden buffer layer or woven bamboo mat with a thickness of 1-2.5 mm. The third layer is laid longitudinally with combined bamboo strips, curtain-like bamboo slats, or woven bamboo mats. The fourth layer consists of combined bamboo strips, curtain-like bamboo slats, or a wooden buffer layer of 2.5 mm or more, fiberglass, or woven bamboo mats, arranged in a longitudinal or transverse direction. The fifth layer is the same as the third layer, and the sixth layer is the same as the second layer. The seventh layer is the top surface layer of phenolic resin, melamine, or other coated materials, or a side-pressed veneer of 2 mm or more. Additional layers of the third, fourth, and fifth layers can be added as needed to achieve the required product thickness. To ensure the tight adhesion between the combined bamboo strips or curtain-like bamboo slats and to increase the thickness and strength of the product, the glued bamboo powder is placed in the third, fourth, and fifth layers. The assembly is secured with plastic resin nails to obtain a semi-finished product with dimensions of L2000-10000 × W140-2100 × T12-50mm.
